# EUROPÄISCHE PATENTSCHRIFT

(11) **EP 2 494 231 B1**
(45) Veröffentlichungstag und Bekanntmachung des Hinweises auf die Patenterteilung: **26.03.2014**
(21) Anmeldenummer: 10784673.5
(22) Anmeldetag: 11.10.2010
(51) Int. Cl.: F16D 48/06, F16D 23/14, F16D 13/75

(54) **BETÄTIGUNGSVORRICHTUNG FÜR KUPPLUNGEN**
ACTUATION DEVICE FOR CLUTCHES
DISPOSITIF D'ACTIONNEMENT POUR EMBRAYAGES

(30) Priorität: 26.10.2009 DE 102009050669
(43) Veröffentlichungstag der Anmeldung: 05.09.2012
(73) Patentinhaber: Schaeffler Technologies GmbH & Co. KG, 91074 Herzogenaurach (DE)
(72) Erfinder: GRAMANN, Matthias, 77871 Renchen (DE)
(86) Internationale Anmeldenummer: PCT/DE2010/001206
(87) Internationale Veröffentlichungsnummer: WO 2011/050768

(56) Entgegenhaltungen:
- EP-A1- 1 744 076
- EP-A1- 1 845 275
- EP-A1- 2 000 691
- WO-A2-2010/035030
- DE-A1-102006 037 338
- DE-B3-102006 006 640

## Beschreibung

Die Erfindung betrifft eine Betätigungsvorrichtung für Kupplungen, insbesondere Kupplungen im Antriebsstrang eines Kraftfahrzeuges zwischen einem Antriebsmotor und einem Schaltgetriebe, mit einer einen Antrieb und Stelleinrichtungen umfassenden, an der Kupplung wirksamen Aktoreinheit, einer innerhalb des durch die Aktoreinheit gebildeten Wirkungsweges wirksamen Nachstellvorrichtung zum Ausgleich zumindest von verschleißbedingten Kennlinienstreuungen der Kupplung.

Betätigungsvorrichtungen für Kupplungen, insbesondere reibschlüssige Kupplungen, sind in einer Vielzahl von Ausführungen aus dem Stand der Technik bekannt. In besonders vorteilhafter Weise finden elektromotorisch angetriebene Aktoren Verwendung, bei welchen Hebel innerhalb der Getriebeglocke über Ein-/Ausrücklager auf die Kupplung einwirken. Ein einzelner Hebel stützt sich dabei in radialer Richtung mit seinen Endbereichen an einem Außen- und Innenlager ab. Die den Antrieb für die Verstellbewegung dessen bildenden Elektromotoren sind direkt am Kupplungsgehäuse, insbesondere an der Kupplungsglocke, angeschraubt. Die Einrückkraft für die Kupplung wird dabei durch eine in der Aktoreinheit befindliche vorgespannte Feder aufgebracht. Diese wirkt in einem radialen Endbereich, vorzugsweise dem radial äußeren Endbereich auf den Hebel ein. Zwischen Außen- und Innenlager befindet sich ein verschiebbarer Auflagerpunkt, dessen Längsbewegung mittels eines Kugelgewindetriebes durch die Rotation der elektrischen Maschine erzeugt wird. Dabei bestimmt die Vorspannkraft der Feder und das aus der Stellposition für den Auflagerpunkt resultierende Hebelübersetzungsverhältnis die Einrückkraft der Kupplung. Der Hebel fungiert als Einrückhebel und wirkt über einen Betätigungshebel direkt auf die reibschlüssig miteinander zu koppelnden Komponenten der Kupplung. Während des Betriebs der Reibungskupplung tritt an den einzelnen Kupplungsscheiben, ausgelöst durch Verschleiß und Setzvorgänge an der Belagfederung, Spiel in Form von Fehlabständen auf, welches innerhalb des Wirkungsweges der Betätigungsvorrichtung der Kupplung kompensiert werden muss. Die Verschleißkompensation erfolgt dabei in üblicher Weise durch einen Ausgleich des Fehlabstandes, in dem der ideale axiale Abstand der Reibflächen der Kupplung zueinander durch über den Umfang wirksame Rampen-/Gegenrampensysteme eingestellt wird, wodurch zwischen dem Betätigungshebel, der gegebenenfalls von einer Tellerfeder gebildet ist, und einem Anschlag am Kupplungsdeckel die gewünschten Abstandsverhältnisse wieder eingestellt werden.

Bei einer Kompensation eines Fehlabstandes durch einen Überweg wird die Reibungskupplung durch eine Betätigung je nach Ausführung über den geschlossenen oder geöffneten Zustand hinaus betätigt, indem der Hebel vom Betätigungssystem entsprechend über diesen Zustand hinausgedrückt oder entspannt wird. Dabei hebt der Betätigungshebel von einer das Rampen-/Gegenrampensystem sperrenden Einrichtung ab, sodass dieses meistens unterstützt von einer entsprechenden Kraftspeichereinrichtung - durch Relativverdrehung der Rampen entgegen der Gegenrampen - den Federabstand ausgleichen kann. Das Maß der Nachstellung hängt dabei wesentlich von der Stellung des Betätigungshebels ab. Für diese Art der Nachstellung durch Erzeugung eines Überwegs haben sich dabei Nachstellvorrichtungen als besonders vorteilhaft erwiesen, die zwischen dem Rampen-/Gegenrampensystem und dem Betätigungshebel eine Vorrichtung vorsehen, mittels derer eine Nachstellung nicht unter Überbrückung des gesamten Überweges erfolgt, sondern stufenweise nachgestellt wird. Hierzu findet beispielsweise eine sogenannte Antriebsfeder als Schneckenradvorrichtung Verwendung, bei der der Überweg und der daraus resultierende zusätzliche axiale Hub des Einrücklagers in Öffnungsrichtung und die wiederum daraus resultierende Verkippung des Betätigungshebels zu einem tangentialen Weg einer an der Antriebsfeder vorgesehenen Zunge führt, die dadurch einen Zahn des Schneckenrades überspringt. Beim nächsten Einrückvorgang verdreht dann das Schneckenrad das Rampen-/Gegenrampensystem um den vorgegebenen Betrag. Ist der Verschleiß jedoch größer als der durch den Betrag verstellte Einrückweg, wird die Nachstellung bei den nächsten Einrückvorgängen solange wiederholt, bis der Verschleiß ausgeglichen ist.

Aus der Druckschrift DE 10 2008 026 421 A1 ist eine Reibungskupplung vorbekannt, bei welcher die Nachstellvorrichtung einen an der Betätigungseinrichtung vorgesehenen schaltbaren Anschlag umfasst, der einen Überweg des Einrückhebels freigibt, wenn ein erfasster Einrückweg des Hebels ein vorgegebenes Maß überschreitet.

Aus der Druckschrift DE 10 2008 026 420 A1 ist demgegenüber eine Einrichtung vorbekannt, bei welcher das Innenlager um einen Ausrückweg verschiebbar ist, wobei ein Endanschlag eine Endstellung des Ausrückweges in einer ausgekuppelten Stellung vorgibt und der Endanschlag in mindestens zwei Anschlagstellungen verbringbar ist, die jeweils unterschiedliche Einstellungen des Ausrückweges in der ausgekuppelten Stellung bewirken, wobei der Endanschlag eine Kulissenführung mit einer Nut und einen Kulissenstein umfasst. Der Kulissenstein kann dabei beispielsweise ein Stift sein. Der Kulissenstein ist vorzugsweise fest oder federelastisch mit dem Ausrückhebel verbunden und die Nut ist vorzugsweise gehäusefest angeordnet. Alternativ ist die Nut in einem im Gehäuse schwenkbar gelagerten Hebel angeordnet. Die Auslösung der Nachstellung wird bewirkt, sobald der Kupplungshub in der zugedrückten Stellung einen Grenzwert überschreitet. Eine der Endstellungen wird derart gewählt, dass der Ausrückhub der Kupplung zwischen dem vollständig ausgekuppelten und dem vollständig eingekuppelten Zustand für die Auslösung der Selbstnachstellung nicht ausreicht, die andere Endstellung wird derart gewählt, dass der Ausrückhub der Kupplung zwischen dem vollständig ausgekuppelten und dem vollständig eingekuppelten Zustand für die Auslösung der Selbstnachstellung ausreichend ist. Je nach Wahl der Einstellung wird die Nachstellung der Kupplung ausgelöst oder unterbleibt. Die Nut umfasst eine Arbeitsbahn, an deren Ende eine Stufe angeordnet ist, die einen oberen Anschlag für den Kulissenstein bewirkt und an dessen oberen Ende eine Stufe angeordnet ist, die bei Überschreiten ein Rückgleiten des Kulissensteins in die Arbeitsbahn verhindert und den Kulissenstein in eine Ausgleichsbahn zwingt, deren unteres Ende einen unteren Anschlag für den Kulissenstein bildet, wobei eine Stufe ein Rückgleiten des Kulissensteins vom unteren Ende in die Ausgleichsbahn verhindert. Allein durch die Gestalt der Nut als Kulissenführung kann die Charakteristik der Nachstellauslösung verändert werden und so durch einfaches Ändern der Nutgeometrie an unterschiedliche Kupplungskennlinien angepasst werden.

Als nächstliegender Stand der Technik wird EP-1845275 betrachtet.

Alle bekannten Ausführungen basieren darauf, dass die Nachstellung immer bei Vorliegen eines Verschleißes in Abhängigkeit des Verschleißes ausgelöst wird. Dies führt jedoch häufig dazu, dass auch Fehleinstellungen auftreten können, die in nachfolgenden Schaltvorgängen zur Verschlechterung der Betriebsweise führen würden und daher eine Korrektur erfordern. Diese Korrekturen sind jedoch mit den bestehenden Systemen nicht möglich oder sehr aufwendig.

Der Erfindung liegt daher die Aufgabe zugrunde, eine Nachstellvorrichtung in Funktionskonzentration derart weiterzuentwickeln, dass neben einem Ausgleich von toleranz- und verschleißbedingten Fehlabständen auch ein Ausgleich von beliebigen Fehleinstellungen möglich ist. Der Ausgleich soll dabei möglichst zeitnah und exakt erfolgen können.

Die erfindungsgemäße Lösung ist durch die Merkmale des Anspruchs 1 charakterisiert. Vorteilhafte Ausgestaltungen sind in den Unteransprüchen beschrieben.

Eine erfindungsgemäße Betätigungsvorrichtung für Kupplungen, insbesondere Kupplungen im Antriebsstrang eines Kraftfahrzeuges zwischen einem Antriebsmotor und einem Schaltgetriebe, mit einer einen Antrieb und Stelleinrichtungen umfassenden, an der Kupplung wirksamen Aktoreinheit, einer innerhalb des durch die Aktoreinheit gebildeten Wirkungsweges wirksamen Nachstellvorrichtung zum Ausgleich zumindest von verschleißbedingten Kennlinienstreuungen der Kupplung, ist dadurch gekennzeichnet, dass die Nachstellvorrichtung derart angeordnet und ausgeführt ist, geeignet zu sein unabhängig vom tatsächlichen Auftreten verschleißbedingter Kennlinienstreuungen entsprechend einer Sollwertvorgabe zum Ausüben von Nachstellbewegungen in unterschiedlichen Richtungen über eine Steuer-/Regelvorrichtung angesteuert zu werden.

Der Begriff Wirkungsweg ist funktional zu verstehen, wobei unter diesem der Weg verstanden wird, entlang dem die, die Steuerung der Kupplungsbetätigung bestimmenden Wirkungen übertragen werden. Die Richtung der Übertragung beschreibt die Wirkungsrichtung.

Die erfindungsgemäße Lösung ermöglicht eine aktive Kupplungsnachstellung, ausgelöst aufgrund einer Sollwertvorgabe für diese unabhängig von einem tatsächlich vorliegenden Verschleißzustand. Dadurch wird die aus dem Stand der Technik bekannte Zwangskopplung zwischen der Auslösung des Nachstellvorganges und dem Auftreten von Verschleiß aufgehoben. Die Aufhebung dieser direkten Kopplung zwischen Verschleiß und Nachstellung ermöglicht dabei in besonders vorteilhafter Weise Nachstellungen in unterschiedlichen Richtungen und beliebiger Größe sowie Nachstellvorgänge unabhängig vom Auslösegrund. Insbesondere können mit der erfindungsgemäßen Lösung auch Fehlbetätigungen und Fehlstellungen innerhalb der Betätigungsvorrichtung ausgeglichen werden. Ferner können die Aktorlasten einer schaltbaren Kupplung, bedingt durch die Kennlinienstreuung der Kupplung aufgrund von Verschleiß und Toleranzen innerhalb des Wirkungsweges verringert werden.

In einer vorteilhaften Ausführung weist die Nachstellvorrichtung einen Antrieb sowie mit dem Antrieb gekoppelte Stellmechanismen zur Einstellung zumindest einer, die Änderung einer Stellgröße innerhalb des Wirkungsweges der Aktoreinheit wenigstens mittelbar charakterisierenden Größe auf, wobei der Antrieb und der Stellmechanismus der Nachstellvorrichtung unabhängig von der Stelleinrichtung der Betätigungsvorrichtung betätigbar sind und die Aktivierung und Deaktivierung der Nachstellvorrichtung entkoppelt von der Betätigung der Betätigungsvorrichtung über eine Steuer- und/oder Regelvorrichtung in Abhängigkeit der Sollwertvorgabe erfolgt. Die Nachstellung bleibt dabei aufgrund der Entkopplung vom tatsächlichen Verschleißzustand so lang erhalten, bis eine erneute Nachstellung erforderlich oder ausgelöst wird.

Die Aktivierung und Deaktivierung der Nachstellvorrichtung kann bereits allein aufgrund der Ansteuerung dieser zur Einstellung einer Änderung der Stellgröße innerhalb des Wirkungsweges ausgelöst werden. In diesem Fall sind die Stellmechanismen der Nachstellvorrichtung vollständig entkoppelt von den Stelleinrichtungen der Betätigungsvorrichtung und die Nachstellvorrichtung liegt als vollständig autarke Einheit zur Betätigungsvorrichtung vor.

Gemäß einer Weiterentwicklung ist der Nachstellvorrichtung eine mechanisch in den Wirkungsweg der Nachstellvorrichtung blockierend eingreifbare Verriegelungs- beziehungsweise Sperreinrichtung zugeordnet. Diese ermöglicht auch im nicht angesteuerten Zustand ein Halten der durch die Nachstellvorrichtung vorgegebenen Einstellung.

In einer besonders vorteilhaften Ausführung werden der Antrieb und ein Teil des Stellmechanismus der Nachstellvorrichtung vom Antrieb und Bestandteilen der Stelleinrichtung der Betätigungsvorrichtung der Kupplung unter Ausnutzung eines im wirkungsweg der Stelleinrichtung der Betätigungsvorrichtung vorgesehenen zusätzlichen Stellweges oder Spiels, innerhalb dessen keine Kraftübertragung auf die Kupplung erfolgt, gebildet. Die damit verbundene zumindest teilweise Integration der Nachstellvorrichtung in die Betätigungsvorrichtung erlaubt neben einer platzsparenden Anordnung eine Funktionskonzentration zwischen den Aktoren von Betätigungs- und Nachstellvorrichtung unter Verringerung der Bauteilanzahl.

Umfasst die Aktoreinheit der Betätigungsvorrichtung ein Hebelsystem mit einem Aus- oder Einrückhebel, der sich mit einem Innenlager an einem Ein-/Ausrücklager abstützt, ein sich an einer Federeinheit abstützendes und in Wirkrichtung der Federeinheit verschiebbares Außenlager und ein hinsichtlich seiner Position zwischen Innen- und Außenlager verschiebbares Gegenlager am Ein-/Ausrückhebel zur Verstellung des Ein-/Ausrückhebels, wird dazu vorzugsweise ein Übertragungsglied der Nachstellvorrichtung mit der Verschiebung des Gegenlagers gekoppelt. Dadurch wird der Antrieb der Aktoreinheit der Betätigungsvorrichtung gleichzeitig als Antrieb der Nachstellvorrichtung genutzt, ferner das Gegenlager als Träger für das Übertragungsglied. Das mit der Bewegung des Gegenlagers gekoppelte Übertragungsglied der Nachstellvorrichtung wirkt mit einer ortsfesten, insbesondere gehäusefesten Kulisse zusammen, welche Führungsbahnen zur Vorgabe unterschiedlicher Richtungen und/oder Größen einer Änderung zumindest einer Stellgröße innerhalb des Wirkungsweges der Aktoreinheit der Betätigungsvorrichtung aufweist und Mittel zur zumindest mittelbaren Übertragung der Änderungsvorgabe auf den Wirkungsweg der Aktoreinheit. Diese Lösung bietet den Vorteil einer hohen Funktionskonzentration und bauraumsparenden Anordnung der Bauteile, indem Bauteilen sowohl Funktionen der Stelleinrichtung der Betätigungsvorrichtung als auch der Stellmechanismen der Nachstellvorrichtung in unterschiedlichen Bereichen des möglichen Wirkungsweges zugeordnet werden.

Die Kulisse weist dazu Führungsbahnen zur Charakterisierung von Änderungen unterschiedlicher Richtungen und Größe der Stellgrößen im Wirkungsweg der Betätigungsvorrichtung auf. Die einzelnen Führungsbahnen beschreiben unterschiedliche Führungsebenen, die über Rampen miteinander verbunden sind. Die Ausbildung und Dimensionierung der einzelnen Führungsbahnen und der Rampen wird als Funktion zumindest einer der nachfolgend genannten Größen festgelegt:
- Richtung der Änderung der Stellgröße im Wirkungsweg der Aktoreinheit der Betäti gungsvorrichtung,
- der erforderlichen und zulässigen Änderung der Stellgröße im Wirkungsweg der Aktoreinheit der Betätigungsvorrichtung,
- des Änderungsverhaltens der Stellgröße im Wirkungsweg der Aktoreinheit;
- der Ausführung/Dimensionierung der mit der Verstellbewegung in der Kulisse gekoppelten Mittel zur Übertragung der Verstellbewegung, insbesondere der weiteren Übertragungsglieder.

Die Kulisse kann somit individuell dem Einsatzfall angepasst ausgeführt sein, wobei die Verstellbewegung optimal an den jeweiligen Einsatzfall und Ankoppelbereich im Wirkungsweg angepasst werden kann.

Bezüglich der Ausbildung der Mittel zur zumindest mittelbaren Übertragung der Vorgabe auf den Wirkungsweg der Aktoreinheit bestehen eine Vielzahl von Möglichkeiten. Diese umfassen zumindest eine Einrichtung zur Umwandlung/Übertragung der Bewegung innerhalb der Kulisse in eine Verstellbewegung, welche beispielsweise translatorisch, als Drehbewegung und/oder als Schwenkbewegung erfolgen kann. Im ersten Fall umfassen die Mittel dazu beispielsweise eine Schubstange, im zweiten Fall beispielsweise ein Zahn- oder Schneckenrad.

Die Verstellbewegung des Übertragungsgliedes an der Kulisse wird dabei direkt oder indirekt über weitere Übertragungselemente an zumindest eines der nachfolgenden Bauteile zur Einstellung der erforderlichen Änderung weitergeleitet:
- Außenlager des Ein-/Ausrückhebeis
- Federeinheit zur Abstützung des Ein-/Ausrückhebeis
- Innenlager
- Ein-/Ausrückhebel
- dem Ein-/Ausrückhebel zugeordnete Anschläge
- auf den Druckring einer Druckplatte wirkende Hebelfeder
- an der Hebelfeder wirksame Andrückscheibe.

Jede der genannten Möglichkeiten bedingt die entsprechend angepasste Ausgestaltung und Dimensionierung der Übertragungsglieder.

Die erfindungsgemäße Lösung ist nachfolgend anhand von Figuren erläutert. Darin ist im Einzelnen Folgendes dargestellt:
- Figur 1a: verdeutlicht in schematisiert vereinfachter Darstellung das Grundprinzip einer erfindungsgemäßen Auslösung und Betätigung einer Nachstellvorrichtung für eine Reibungskupplung;
- Figur 1b: verdeutlicht eine besonders vorteilhafte Integration der Nachstellvorrichtung in ein bestehendes System;
- Figur 2: zeigt beispielhaft den Aufbau und die Wirkungsweise einer Nachstellvorrichtung;
- Figur 3: verdeutlicht eine mögliche Ausführung einer Kulisse;
- Figuren 4a bis 4g: zeigen unterschiedliche Verstellbewegungen des Nachstellschiebers in der Kulisse;
- Figur 5: verdeutlicht in schematisiert vereinfachter Darstellung die Funktion und Ausbildung der Mittel zur Übertragung der Nachstellbewegung.

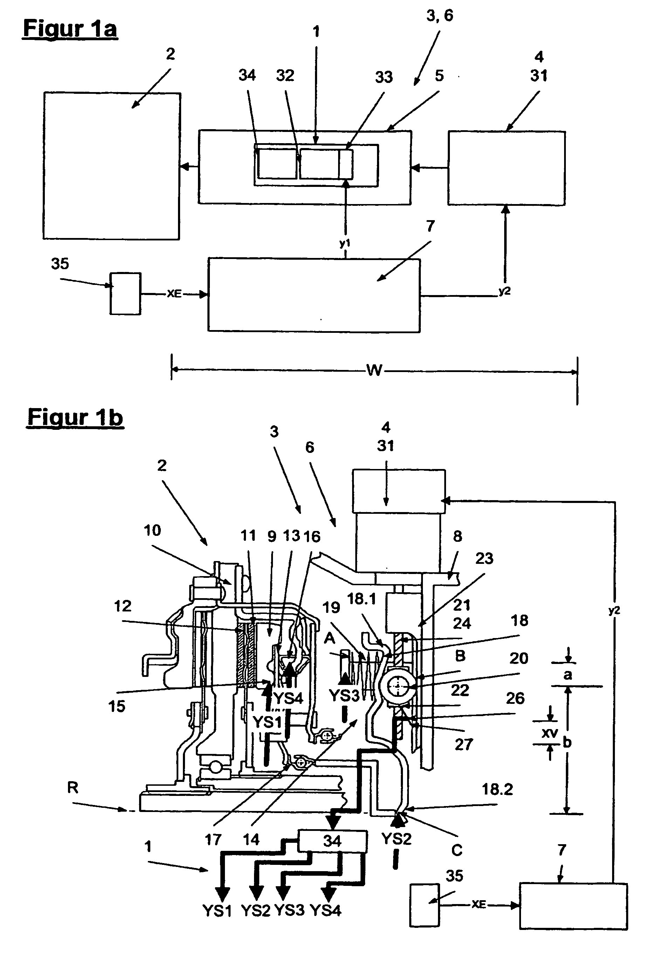

Die Figur 1a verdeutlicht in schematisiert stark vereinfachter Darstellung anhand eines Systemschaubildes die Funktion und die Zuordnung einer erfindungsgemäß ansteuerbaren Nachstellvorrichtung 1 zum Ausgleich von toleranz- und verschleißbedingten Abständen zwischen reibschlüssig miteinander zu koppelnden Komponenten einer Reibungskupplung 2 und/oder Fehleinstellungen dieser. Der Reibungskupplung 2 ist eine Betätigungsvorrichtung 3 zugeordnet, umfassend einen Antrieb 4 und zumindest eine Stelleinrichtung 5, die durch den Antrieb 4 angetrieben, an der Reibungskupplung 2, insbesondere den wenigstens mittelbar miteinander reibschlüssig zu koppelnden Komponenten, als Aktoreinheit 6 wirksam wird. Die Stelleinrichtung 5 umfasst in der Regel mehrere funktional miteinander gekoppelte Stellglieder. Der durch die Aktoreinheit 6 beschriebene Wirkungsweg ist mit W bezeichnet. Die Betätigungsvorrichtung 3 fungiert als Stellvorrichtung zur Einstellung eines den einzustellenden Zustand der Reibungskupplung 2 charakterisierenden Sollwertes. Dieser entspricht je nach Ausführung der Reibungskupplung 2 und der dieser zugeordneten Betätigungsvorrichtung 3 beispielsweise einer erforderlichen Anpresskraft an den miteinander reibschlüssig zu koppelnden Komponenten, welche über die Betätigungsvorrichtung 3, insbesondere die Aktoreinheit 6 auf unterschiedliche Art und Weise bereitgestellt werden kann. Da die reibschlüssig miteinander zu koppelnden Elemente Verschleiß unterliegen, welcher bei der Betätigung durch eine Änderung beispielsweise eines Stellweges über die Betätigungsvorrichtung 3 ausgeglichen werden muss, ist eine Nachstellvorrichtung 1 vorgesehen. Die Nachstellvorrichtung 1 dient erfindungsgemäß nicht nur der Kompensation von Verschleiß sondern auch der Korrektur anderer Fehleinstellungen an der Reibungskupplung 2. Die Nachstellvorrichtung 1 ist dazu innerhalb des mit der Stelleinrichtung 5 beschreibbaren Teils des Wrkungsweges 6 wirksam. Der Begriff Wirkungsweg ist funktional zu verstehen. Dieser kann durch Wege, Winkel, Bogenlängen und/oder andere Übertragungsgrößen beschrieben werden. Die Nachstellvorrichtung 1 umfasst einen Antrieb 31 und zumindest einen mit diesem gekoppelten Stellmechanismus 32 zur Einstellung zumindest einer, die Änderung einer Stellgröße innerhalb des Wirkungsweges W der Aktoreinheit 6 wenigstens mittelbar beschreibenden Größe. Die Nachstellvorrichtung 1 ist erfindungsgemäß frei ansteuerbar, das heißt wird unabhängig von einem tatsächlich vorliegenden Verschleißzustand hinsichtlich der Richtung und/oder Größe der Änderung einer Stellgröße innerhalb des Wirkungsweges W der Stelleinrichtung 5 angesteuert. Die Nachstellvorrichtung 1 ist dazu schaltbar, das heißt wahlweise betätigbar oder deaktivierbar. Die Aktivierung und Deaktivierung kann durch die Vornahme der Ansteuerung selbst oder aber die Ansteuerung einer Sperr- beziehungsweise Verriegelungseinheit 33 realisiert werden, welche wahlweise aktiviert oder deaktiviert werden kann und den Wirkungsweg der Nachstellvorrichtung 1 freigibt oder blockiert.

Die Aktivierung/Deaktivierung wird über eine Steuer- und/oder Regelvorrichtung 7 eingeleitet, über welche die Nachstellvorrichtung 6 auf Anforderung, vorzugsweise in Abhängigkeit zumindest einer an dieser vorliegenden Eingangsgröße XE in Form einer einen Verschleißzustand der Reibungskupplung 1 und/oder eine Fehlbetätigung wenigstens mittelbar beschreibenden Größe eingeleitet. Die Erfassung/Ermittlung der Eingangsgröße XE kann beispielsweise direkt mittels eigens dafür vorgesehenen Erfassungseinrichtungen 35 erfolgen und/oder aus anderen, die Betriebsweise der Reibungskupplung 2 wenigstens mittelbar beschreibenden Größen abgeleitet werden. Diese bewirkt eine Freigabe beziehungsweise Freischaltung der Nachstellvorrichtung 1 durch Vorgabe entweder jeweils einer Stellgröße Y2 zur Steuerung des Übertragungsverhaltens der Nachstellvorrichtung 1 oder einer Stellgröße Y1 zur Aktivierung beziehungsweise Deaktivierung der Nachstellvorrichtung 1 und ferner einer weiteren Stellgröße Y₂ zur Steuerung des Übertragungsverhaltens der Nachstellvorrichtung 1. Die Freigabe erfolgt im letztgenannten Fall durch Ansteuerung der Verriegelungseinheit 33.

Die einzelne Stellgröße Y₂ oder Stellgrößen sind dabei im Wesentlichen von der Ausgestaltung der Nachstellvorrichtung 1 selbst abhängig. Y₂ kann bei der dargestellten Ausführung die Ansteuerung des Antriebs 31 beinhalten. Um nach Möglichkeit die Anzahl der erforderlichen Aktoren innerhalb der Betätigungsvorrichtung 3 möglichst gering zu halten, ist die Nachstellvorrichtung 1 derart ausgebildet und ausgeführt, dass diese Bestandteile der Betätigungsvorrichtung 3 zur Auslösung und Umsetzung der erforderlichen Nachstellbewegung innerhalb des Wirkungsweges W, das heißt der Änderung des Übertragungsverhaltens innerhalb des Wirkungsweges W der Betätigungsvorrichtung 3 nutzt. Gemäß einer besonders vorteilhaften Ausführung wird zur Erzielung einer hohen Funktionskonzentration die Nachstellvorrichtung 1 derart in die Betätigungsvorrichtung 3 der Reibungskupplung 2 integriert, dass diese zur Betätigung, insbesondere Auslösung und Einstellung der Nachstellbewegung Bestandteile der Aktoreinheit 6 nutzt. In dieser besonders vorteilhaften Ausführung bildet der Antrieb 4 der Betätigungsvorrichtung 3 gleichzeitig den Antrieb 31 der Nachstellvorrichtung 1. Ferner werden Bestandteile der Stelleinrichtungen 5 als Stellmechanismen 32 der Nachstellvorrichtung 1 genutzt. Dazu wird in besonders vorteilhafter Weise ein Spiel oder ein zusätzlicher Verstellweg innerhalb der Aktoreinheit 6 vorgesehen, innerhalb dessen keine Kraftübertragung durch diese auf die Reibungskupplung 2 erfolgt. Dieser zusätzliche Verstellweg oder Spiel wird zur Einstellung der Richtung und/oder Größe der erforderlichen Änderung zumindest einer Stellgröße innerhalb des Wirkungsweges W der Aktoreinheit 6, insbesondere am Antrieb 4 und/oder einer der Stelleinrichtungen 5 der Betätigungsvorrichtung 3 genutzt, welche dann über Mittel 34 in den Wirkungsweg W, insbesondere die Stelleinrichtungen 5 übertragen wird.

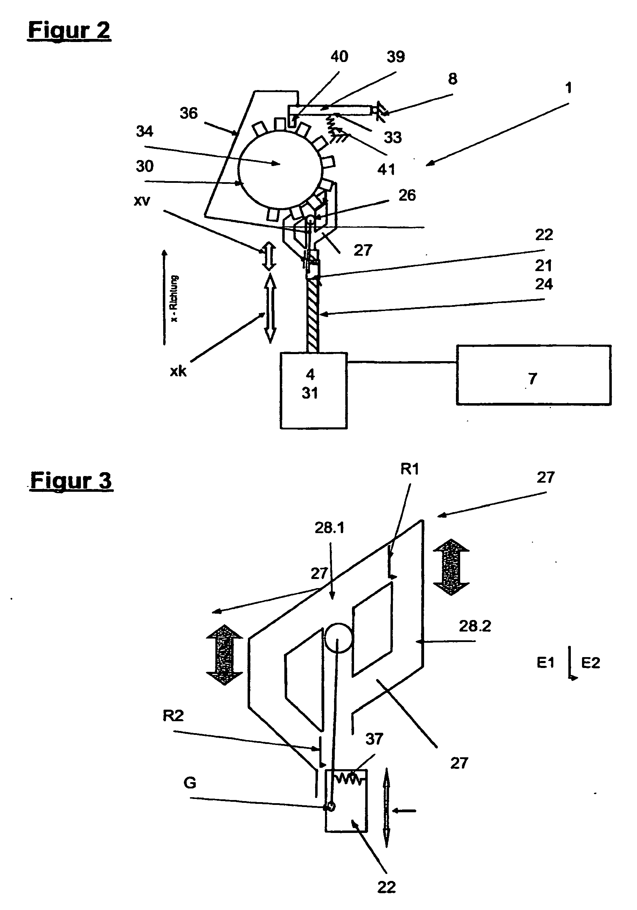

Eine besonders vorteilhafte Ausführung und Integration gemäß Figur 1a ist anhand eines Systemschaubildes beispielhaft in der Figur 1b für eine Reibungskupplung 2 mit elektromechanischer Aktivierung/Deaktivierung wiedergegeben. Die Darstellung erfolgt hier zu Veranschaulichungszwecken lediglich schematisiert stark vereinfacht, wobei die konkrete Ausbildung und beispielhafte Lösung für eine derartige Nachstellvorrichtung 1 in der Figur 2 anhand eines Systemschaubildes für den Antrieb 31, die Stellmechanismen 32 sowie die Mittel 34 wiedergegeben ist.

Die Figur 1b zeigt einen Ausschnitt einer koaxial zu einer Drehachse R angeordneten Reibungskupplung 2. Diese umfasst ein Gehäuse 8, eine gegenüber dem Gehäuse 8 drehfest und axial verlagerbare Druckplatte 9 sowie eine mit dem Gehäuse 8 fest verbundene Gegendruckplatte 10, wobei die feste Verbindung eine ortsfeste, insbesondere starre Verbindung darstellt. Zwischen der Druckplatte 9 und der Gegendruckplatte 10 sind die Reibbeläge 11 einer Kupplungsscheibe 12 gegen eine sich am Gehäuse 8 abstützende Hebelfeder 13 verspannbar. Die Hebelfeder 13 bildet dabei einen sogenannten Betätigungshebel für die Reibungskupplung 2, welche über eine Ein-/Ausrückeinrichtung 14 betätigbar ist. Ein/Ausrückeinrichtung 14 sowie Hebelfeder 13 sind dabei miteinander funktional, insbesondere mechanisch gekoppelte Stellglieder der Betätigungsvorrichtung 3, deren Übertragungsverhalten über deren Ausführung und Kopplung und durch den Antrieb 4 einstellbar ist. Bei der in der Figur 1b beispielhaft dargestellten Reibungskupplung 2 handelt es sich um eine sogenannte zugedrückte Kupplung, welche im kraftfreien Zustand geöffnet ist und bei Beaufschlagung der den Betätigungshebels bildenden Hebelfeder 13 mit einer von der Ein/Ausrückeinrichtung 14 vorgegebenen Kraft durch Axialverlagerung dieser geschlossen wird, wobei die von den Reibbelägen 11 gebildeten Reibflächen der Kupplungsscheibe 12 mit den Reibflächen der Druckplatte 9 und der Gegendruckplatte 10 in Reibeingriff verbringbar sind. Es versteht sich, dass auch bei einer sogenannten aufgedrückten Kupplung eine Verwendung der Betätigungsvorrichtung als Hebelausrücker in ähnlicher Weise vorteilhaft ist und daher von der Offenbarung ebenfalls umfasst ist.

Die Kupplungsscheibe 12 ist mit einer hier nicht dargestellten Getriebeeingangswelle drehfest verbunden. Die Gegendruckplatte 10 ist beispielhaft mit einer hier nicht dargestellten Kurbelwelle gekoppelt und die Druckplatte 9 ist gegenüber der Gegendruckplatte 10 axial in Richtung parallel der Drehachse verschiebbar, jedoch gegenüber der Gegendruckplatte 10 drehfest gelagert. Dabei wird durch Aufdrücken der Druckplatte 9 auf die Gegendruckplatte 10 die Kupplungsscheibe 12 zwischen beiden eingeklemmt. Die Hebelfeder 13 wirkt über einen Druckring 15 auf die Druckplatte 9. Ferner stützt diese sich an einer am Gehäuse 8 radial nach innen gerichteten Andruckscheibe 16 und am radial inneren Bereich am Ein-/Ausrücklager 17 ab. Wird dabei im dargestellten Beispiel das Ein-/Ausrücklager 17 nach links gedrückt, wird die Druckplatte 9 gegen die Gegendruckplatte 10 gedrückt, sodass die Reibungskupplung 2 geschlossen wird und Drehmoment übertragen werden kann. Um das Ein-/Ausrücklager 17 und darüber die den Betätigungshebel bildende Hebelfeder 13 zwischen einer ausgekuppelten Stellung und einer eingekuppelten Stellung zu bewegen, ist die Ein/Ausrückeinrichtung 14 vorgesehen. Diese umfasst im einfachsten Fall einen Ein/Ausrückhebei 18, dessen sich in radialer Richtung erstreckende Hebelenden 18.1 und 18.2 sich in radialer Richtung betrachtet jeweils an einem radial äußeren Lager, insbesondere Außenlager A und in radialer Richtung im Bereich des Innenumfanges an einem radial inneren Lager, insbesondere Innenlager C abstützen. Die Abstützung am Außenlager A erfolgt dabei an einer Federeinheit 19, welche dem Aufbringen der Ausrückkraft zur Verstellung des Betätigungshebels dient. Das Innenlager C stützt sich am Ein-/Ausrücklager 17 ab. Beide Lagerstellen sind hier nur in schematisiert vereinfachter Darstellung angedeutet. Es handelt sich hier um Lagereinheiten, die den Ein-/Ausrückhebel 18 in radialer Richtung sowie in Umfangsrichtung hinsichtlich seiner Lage festlegen.

Der Hebelfeder 13, welche vorzugsweise von einer Tellerfeder gebildet wird, übt dabei auf das Ein-/Ausrücklager 17 eine nach rechts gerichtete Kraft aus, die Federeinheit 19 übt auf das Außenlager A des Ein-/Ausrückhebeis 18 eine ebenfalls nach rechts gerichtete Kraft aus. Um am Innenlager C des Ein-/Ausrückhebels 18 eine nach links gerichtete Kraft auf das Ein-/Ausrücklager 17 auszuüben, ist zwischen Innenlager C und Außenlager A ein Gegenlager B angeordnet. Dieses ist in radialer Richtung verschiebbar gelagert und umfasst im einfachsten Fall einen auf einer Führung 21 in radialer Richtung führbaren Lagerbock 22 mit Rollen 20, mit denen sich der Lagerbock 22 an einer kupplungs- oder getriebefest angeordneten Abstützung 23 abstützt. Im einfachsten Fall wird die Führung 21 für den Lagerbock 22 von einer Spindel 24 gebildet, die mit dem Antrieb 4 gekoppelt und von diesem antreibbar ist. Dadurch wird die Spindel 24 in eine Drehbewegung versetzt und der Lagerbock 22, welcher vorzugsweise von einer Kugelumlaufmutter gebildet wird, bezogen auf die Drehachse R der Reibungskupplung 2 in radialer Richtung unter Veränderung des Auflagerpunktes am Ein-/Ausrückhebei 18 verschoben.

Der Gesamtabstand zwischen radial innerer Lagerstelle und äußerer Lagerstelle, das heißt Innentager C und Außenlager A, wird durch die Stellung des Gegenlagers B aufgeteilt in einen der Wirkung der Federeinheit 19 zugeordneten Hebelarm a und einen dem Ein-/Ausrücklager 17 zugeordneten Hebelarm b. Das Verhältnis der auf das Ein-/Ausrücklager 17 ausgeübten Kraft zu der Federkraft entspricht dem Verhältnis der beiden Hebelarme a, b. Das heißt, die Stellposition des Gegenlagers B bestimmt letztendlich die am Ein-/Ausrücklager 17 wirkende Kraft. Je weiter das Gegenlager B vom Außenlager A entfernt ist, desto geringer wird die auf diesen ausgeübte Kraft.

Verschleißerscheinungen oder Fehlbetätigungen und Fehleinstellungen, das heißt Abweichungen vom Idealzustand, insbesondere größere erforderliche Stellwege und/oder Kräfte, sind in diesem System durch entsprechende additiv vorgesehene Wege kompensierbar. Die Kompensation erfolgt über die Nachstellvorrichtung 1, welche hier nur angedeutet ist und erfindungsgemäß, wie bereits ausgeführt, Bestandteile der Stelleinrichtungen 5, insbesondere der Ein-/Ausrückeinrichtung 14 nutzt. In besonders vorteilhafte Ausführung wird die Nachstellvorrichtung 1, insbesondere der Stellweg dieser, in der Ein-/Ausrückeinrichtung 14 integriert, indem in dieser ein zusätzlicher Stellweg xv vorgesehen ist, innerhalb dessen keine Kraft auf die Reibungskupplung 2 übertragen wird. Dazu wird in die Ausrückeinrichtung 14 ein zusätzlicher Verstellweg xv konstruktiv integriert, welcher im kraftfreien Zustand eine weitere Verschiebung des Lagerbockes 22 erlaubt, ohne eine Kraft über die Rollen 20 auf den Ausrückhebel 18 zu bewirken. Im zusätzlichen Verstellweg xv ist die am Lagerbock 22 vorgesehene Rolle 20 frei von einer Einwirkung auf den Ein-/Ausrückhebel 18. Die Nachstellvorrichtung 1 umfasst dazu im einfachsten Fall ein Übertragungsglied in Form eines Nachstellschiebers 26, der mit einer Kulisse 27 zusammenwirkt. Im Einzelnen ist der Nachstellschieber 26 in der Kulisse 27 in unterschiedlichen Führungen 28.1 bis 28.3 führbar, wobei über die Stellung des Nachstellschiebers 26 in den einzelnen Führungen 28.1 bis 28.3 die Größe und Richtung einer erforderlichen Änderung einer Stellgrößen im Wirkungsweg W der Aktoreinheit 6 eingestellt wird. Diese wird über Mittel 34 auf den Wirkungsweg W übertragen. Die Mittel 34 sind hier nur schematisiert dargestellt und die Kopplung mit dem Nachstellschieber 26 nur funktional angedeutet. Die Mittel 34 übertragen Stellgrößen, hier beispielhaft mögliche Stellgrößen YS1, YS2, YS3 und/oder YS4 auf den Wirkungsweg W der Aktoreinheit 6 zur Änderung der in diesem Bereich des Wirkungsweges W vorliegenden Stellgrößen der einzelnen Stelleinrichtungen 5. Die Stellgröße YS1 wird dabei beispielsweise in Form einer, eine Verstellbewegung in axialer Richtung bewirkenden Drehbewegung am Druckring 15 der Druckplatte 9 wirksam, die Stellgröße YS2 wird am Innenlager C, YS3 am Außenlager A und YS4 an der Andruckscheibe 16 wirksam. Die Möglichkeiten der Einwirkung innerhalb des Wirkungsweges W sind beispielhaft. Denkbar sind auch andere Möglichkeiten. Dabei wird vorzugsweise immer nur eine Stellgröße innerhalb des Wirkungsweges W geändert. Denkbar ist auch die aufeinander abgestimmte Änderung mehrerer Stellgrößen der Stelleinrichtungen 5 innerhalb des Wirkungsweges W.

Die Nachstellvorrichtung 1 ist ferner durch eine hier nicht dargestellte Verriegelungseinheit 33 charakterisiert, welche die Nachstellvorrichtung 1 wahlweise freigibt oder sperrt. Die Verriegelungseinheit 33 ist gelenkig am Gehäuse 8 gelagert.

Die Figur 2 verdeutlicht eine vorteilhafte Ausführung einer Nachstellvorrichtung 1 gemäß Figur 1b in schematisierter Darstellung. Die Nachstellvorrichtung 1 nutzt den Antrieb 4 sowie die Führung 21 der Betätigungsvorrichtung 3, an welcher der Lagerbock 22 geführt ist. An diesem ist vorzugsweise der Nachstellschieber 26 federnd angelenkt. Der Nachstellschieber 26 ist ferner drehbar an einem Drehpunkt G am Lagerbock 22 gelagert. Dieser ist im dargestellten Fall beispielhaft am vom Lagerbock 22 wegweisenden Endbereich mit einem Gleitstein, insbesondere Kulissenstein geführt. Der Kulissenstein ist mit 29 bezeichnet und in der Kulisse 27 geführt. Erkennbar ist dabei durch den längeren Doppelpfeil der Arbeitsbereich xk der Betätigungsvorrichtung 3 zur Kupplungsansteuerung, der durch den Verstellweg des Lagerbockes 22 auf der Spindel 24 charakterisiert ist und dem normalen Verstellweg bei Betätigung oder Deaktivierung der Reibungskupplung 2 entspricht. Zusätzlich ist hier für den Lagerbock 22 ein weiterer Verstellweg xv vorgesehen, der eine weitere Verschiebung dessen gegenüber beziehungsweise entlang der Spindel 24 ermöglicht und dabei eine Verstellbewegung des Nachstellschiebers 26 in den durch die Kulisse 27 beschriebenen Führungen bewirkt. Innerhalb dieses zusätzlichen Verstellweges xv wird über die Betätigungsvorrichtung 3 keine Kraft auf die Reibungskupplung 2 übertragen.

Die Kulisse 27 ist im dargestellten Fall durch zumindest drei Kulissenbahnen 28.1 bis 28.3 charakterisiert, wobei zwischen diesen Rampen R1 und R2 vorgesehen sind. Die Kulisse 27 ist am Gehäuse 8 ortsfest angeordnet. In dieser wird der Kulissenstein 29 des Nachstellschiebers 26 bedingt durch die Verstellbewegung der Anlenkung und Koppelung des Nachstellschiebers 26 an die Bewegung des Gegenlagers B und damit des Lagerbockes 22 gekoppelt geführt. Über den Kulissenstein 29, insbesondere dessen Stellung kann eine Stellgröße zur Änderung der Richtung und/oder Größe einer Stellgröße innerhalb des Wirkungsweges W der Aktoreinheit 6 der Betätigungsvorrichtung 3 eingestellt werden. Diese wird über Mittel 34 zur Übertragung auf die entsprechenden Stelleinrichtungen 5 innerhalb des Wirkungsweges W übertragen. Diese umfassen im dargestellten Fall zumindest ein Übertragungsglied 30, welches die Einstellung an der Kulisse 27 übernimmt und auf einen Bereich des Wirkungsweges W der Stelleinrichtung 5 überträgt. Dieses Übertragungsglied 30 ist im dargestellten Fall als Zahnrad 38 ausgeführt, welches durch die Einstellung an der Kulisse 27 eine Verstellbewegung in Form einer Verdrehbewegung erfährt, welche dann wiederum direkt als Stellgröße, bezogen auf Figur 1b beispielhaft YS1 bis YS4 auf die einzelnen miteinander gekoppelten Stelleinrichtungen 5 der Betätigungseinrichtung 3 wirkt, wobei entweder direkt die Drehbewegung übertragen wird oder diese über weitere Übertragungsglieder in eine translatorische oder andere Bewegung umgesetzt wird.

Die Form der Kulisse 27 ist dazu derart ausgebildet, dass diese geeignet ist, aufgrund der diese und die einzelnen Rampen R1, R2 charakterisierenden Geometrie und Dimensionierung, welche die Niveauunterschiede zwischen unterschiedlichen Ebenen innerhalb der Kulisse 27 beschreiben, die erforderlichen Verstellbewegungen einzustellen. Die Stellgrößen zur Änderung der Stellgrößen innerhalb des Wrkungsweges W können dabei als Funktion des Verstellweges xv, der Geometrie und Dimensionierung der Kulisse 27, insbesondere der Anordnung und Ausbildung der einzelnen Führungsbahnen 28.1 bis 28.3 beschrieben werden. Dadurch kann jede einzelne Verstellbewegung innerhalb des Wirkungsweges genau eingestellt werden.

Die mögliche Kulissenform für die Korrektur von Verschleißbewegungen in einer Richtung ist dabei in der Druckschrift DE 10 2008 026 420 A1 beschrieben. Bei dieser Ausführung ist jedoch die Kulisse derart ausgeführt, dass diese lediglich bei Erfassung des Verschleißes wirksam wird, während erfindungsgemäß die Kulisse 27 bei Bedarf angesteuert wird. Die Freigabe der Nachstellvorrichtung 1 erfolgt hier beispielhaft über die Kopplung 36 des Nachstellschiebers 26 mit einer Vierriegelungseinheit 33. Diese wirkt auf das zumindest mittelbar mit dem Wrkungsweg W der Betätigungsvortichtung 3 gekoppelte Übertragungsglied 30 ein, welches hinsichtlich seiner Wirkung blockiert oder freigegeben wird. Die Kopplung kann beispielhaft mechanisch oder anderweitig erfolgen, insbesondere indirekt über die Ansteuerung der Nachstellvorrichtung 1.

Die in Figur 2 dargestellte Nachstellvorrichtung 1 umfasst als Übertragungsglied 30 ein außenverzahntes rotierbares Element, insbesondere Zahnrad 38, das durch den Eingriff der Verriegelungseinheit 33 blockiert werden kann. Dazu ist ein Klinkenmechanismus aus einem am Gehäuse 8 gelenkig, insbesondere schwenkbar gelagerten Hebel 39 und eine, die Zähne am Zahnrad 38 durch Eingriff in diese blockierende Klinke 40 vorgesehen. Die Beaufschlagung zur Freigabe des Übertragungsgliedes 30 und damit Entsperrung erfolgt über die Steuer-und/oder Regelvorrichtung 7 und die Kopplung 36 zwischen der Verstellbewegung des Nachstellschiebers 26 und der Verriegelungseinheit 33. Der Hebel 39 ist dazu über eine Federeinheit 41 hinsichtlich der Sperrposition vorgespannt, so dass das Lösen aktiv erfolgen muss.

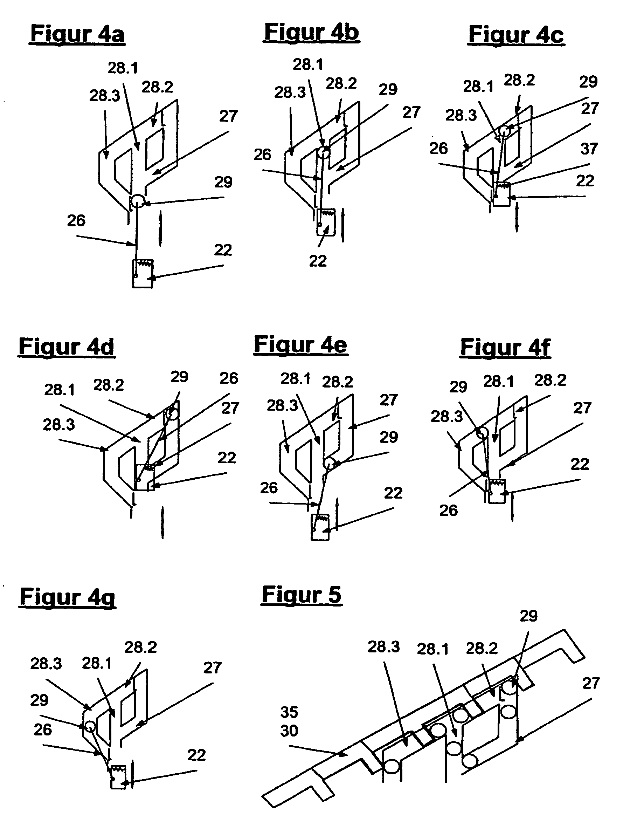

Die Übertragung der Stellbewegung des Nachstellschiebers 26 über ein Zahnrad 38 ist beispielhaft und wird in der Figur 5 in abgewickelter Darstellung wiedergegeben. Denkbar sind auch andere Ausführungen des Übertragungsgliedes 30, beispielsweise in Form einer Zahnstange.

Das Übertragungsglied 30 und die mit diesem weiter gekoppelten Übertragungsglieder oder Teile des Wirkungsweges W der Betätigungsvorrichtung 3 können verschiedenartig ausgebildet sein und sich hinsichtlich des Übertragungsverhaltens, insbesondere der Umwandlung von Bewegungsarten unterscheiden. Dabei können translatorische in rotatorische oder Schwenkbewegungen oder andere umgewandelt werden.

Ferner ist die Wirkung des Überragungsgliedes 30 in Abhängigkeit der Ausführung dessen und Dimensionierung vielfältig ausbildbar. Denkbar sind dabei Übertragungen auf einen in radialer Richtung im Bereich des Innenumfanges für die Verstellung des Ein-/Ausrückhebels 18 vorgesehenen Anschlag, der den Weg des Ein-/Ausrückhebeis in Richtung zum Gehäuse 8 begrenzt. Ferner denkbar ist die Nachstellung an der Federeinheit 19, eine Verschiebung des Außenlagers A, eine Nachstellung im Bereich der Kopplung zwischen dem Innenlager C und der Hebelfeder 13, eine Nachstellung am Ein-/Ausrücklager 17 sowie eine Wirkung auf den Druckring 15 der Druckplatte 9. Ferner denkbar ist eine Verstellung am Betätigungshebel, insbesondere dem radial äußeren Lager der Hebelfeder 13. Es bestehen somit eine Vielzahl von Möglichkeiten. Die Übertragung der Nachstellbewegung, welche durch die Stellung des Nachstellschiebers 26 gegenüber der Kulisse 27 erfolgt, kann unterschiedlich vorgenommen werden. In besonders vorteilhafter Weise wird diese gemäß Figur 2 über ein Zahnrad 38 realisiert, das die Führung des Kulissensteines 29 in Form einer translatorischen Bewegung in eine rotatorische umsetzt und diese wiederum auf ein Element zur Änderung dessen Verstellweges innerhalb der Betätigungsvorrichtung 3 überträgt.

Die Auslösung eines Nachstellvorganges erfolgt über die Steuer- und/oder Regelvorrichtung 7 bei Vorliegen eines entsprechenden Anforderungssignals. Dieses wird dann in eine Stellgröße, insbesondere Y1 und Y2 zur Aktivierung der Nachsteltvorrichtung 1 und zur Einstellung des erforderlichen Nachstellweges umgewandelt, über welche die Nachstellvorrichtung 1, insbesondere der Antrieb 31, der Nachstellschieber 26 und die Verriegelungseinheit 33 angesteuert werden.

Die Figur 3 verdeutlicht in vergrößerter Darstellung den Aufbau der Kulisse 27 aus einzelnen Führungsbahnen 28.1 bis 28.3. Dabei fungiert die Führungsbahn 28.1 als Zuführbahn für die Führungsbahnen 28.2 und 28.3, welche im Winkel zur Führungsbahn 28.1 verlaufen, wobei die einzelnen Führungsbahnen durch unterschiedliche Ebenen charakterisiert sind. Die Führungsbahn 28.1 wird in der Neutralstellung der Nachstellvorrichtung 1 genutzt. In dieser bewegt sich der Nachstellschieber 26 bereits bei der Verstellbewegung des Lagerbockes 22 zur Kupplungsbetätigung innerhalb des Verstellweges xk. Erst bei Vorliegen einer Anforderung zur Nachstellung wird der Verstellweg xv genutzt und der Nachstellschieber 26 in den in Führungsrichtung liegenden Endbereich der Führung 28.1, welcher die Führungsbahnen 28.2 und 28.3 kreuzt, bewegt. Aufgrund der Vorspannkraft der Federeinheit 37 erfolgt bei Erreichen der Führung 28.3 eine Bewegung des Nachstellschiebers 26 in diese hinein auf eine höhere Ebene. Bei vollständiger Bewegung des Nachstellschiebers 26 bis zur Wandung der Kulisse 27, welche die Führung 28.2 begrenzt, wird der Nachstellschieber 26 in diese hineingedrückt und auf dieser geführt. Die einzelnen Führungen sind dabei durch unterschiedliche über Rampen R1, R2 getrennte Ebenen charakterisiert. Der Pfeilverlauf in Figur 3 gibt dabei die Änderung der Ebenen zwischen diesen wieder und damit die Rampenrichtung. Die Rampe R1 ist zwischen der Führungsbahn 28.2 und 28.1, die Rampe R2 zwischen 28.3 und 28.1 vorgesehen.

Die Figuren 4a bis 4g verdeutlichten dabei unterschiedliche Stellungen des Nachstellschiebers 26 in der Kulisse 27. In Figur 4a befindet sich der Nachstellschieber 26, insbesondere der Kulissenstein 29 in der Führungsbahn 28.1 und damit der Haupt- oder Grundführungsbahn in einer Stellung, wie sie durch die Verstellbewegung des Lagerbockes 22 innerhalb des Verstellweges xk zur Kupplungsbetätigung eingenommen wird. Die Nachstellvorrichtung 1 ist in diesem Zustand inaktiv.

Figur 4b verdeutlicht die Bewegung in Richtung des vorderen Kreuzungspunktes mit den Führungsbahnen 28.2 und 28.3 bei Verstellbewegung innerhalb des Verstellbereiches xv. Figur 4c verdeutlicht das Erreichen der Wandung der Kulisse 27 und Führung innerhalb der Führung 28.2 im Verstellbereich xv für den Lagerbock 22. Die Bewegung entgegen der Federkraft der Federeinrichtung 37 erfolgt hier aufgrund der Ausbildung der Wandung der Führungsbahn 28.2, welche in Führungsrichtung des Drehpunktes G den Kulissenstein 29 in die vorgegebene Neigung zwingt. Dies wird durch einen in Führungsrichtung abgeschrägten Verlauf erzielt. Dieser Neigungsbereich beschreibt die Richtung und Größe der Änderung und erstreckt sich bis zur Rampe R1, bis zu welcher eine Verstellbewegung auf den Wirkungsweg W der Aktoreinheit 6 der Betätigungsvorrichtung 3 übertragen werden kann. An dieser wird der Kulissenstein 29 in eine tiefere Ebene E2 gedrückt und fährt gemäß 4e zurück in die Grundund Arbeitsbahn, insbesondere Führungsbahn 28.1. Die Verstellbewegung im Führungsweg bleibt erhalten.

Figuren 4f und 4g verdeutlichen das Verfahren des Kulissensteins 29 in der jeweils anderen Führungsbahn 28.3 und das Zurückfahren zu 28.1. Dabei erfolgt die Führung in 28.2 aufgrund der Federkraft der Federeinheit F bei Erreichen einer Stellung des den Nachstellschieber 26 tragenden oder mit diesem gekoppelten Gegenlagers B, in welcher die die Führungsbahn 28.3 auf der von der Führungsbahn 28.1 weggerichteten Seite begrenzenden Wandung nicht erreicht wird.

Die Führung erfolgt dabei derart, dass gemäß Figur 5 ein Übertragungsglied 30, insbesondere Zahnrad 38 mitgenommen wird und die Verstellbewegung somit über dieses übertragen wird. Nach Erreichen der erforderlichen Maximaleinstellung werden der Kulissenstein 29 und der Nachstellschieber 26 wieder zurückgeführt.

Die Verstellbewegung bleibt bei Verriegelung erhalten.

Die erfindungsgemäße Lösung ist nicht auf die in den Figuren 1 bis 5 dargestellten Ausführungen beschränkt. Allen gemeinsam ist, dass die Verstellanforderung der Nachstellvorrichtung 1 unabhängig vom tatsächlichen Verschleiß erfolgt und elektronisch über ein Signal wiedergegeben wird. Die Stellgröße Y1, Y2 zur Ansteuerung der Nachstellvorrichtung 1 wird dann in Abhängigkeit in der Steuer- und/oder Regelvorrichtung hinterlegten Kennlinien oder anderer Zusammenhänge ermittelt und die Stellmechanismen 32, insbesondere die Führung des Nachstellschiebers 26, entsprechend der Stellgrößenanforderung zur Erzielung der geforderten Änderung eingestellt.

### Bezugszeichenliste

- 1: Nachstellvorrichtung
- 2: Reibungskupplung
- 3: Betätigungsvorrichtung
- 4: Antrieb
- 5: Stelleinrichtung der Betätigungsvorrichtung
- 6: Aktoreinheit
- 7: Steuer- und/oder Regelvorrichtung
- 8: Gehäuse
- 9: Druckplatte
- 10: Gegendruckplatte
- 11: Reibbelag
- 12: Kupplungsscheibe
- 13: Hebelfeder, insbesondere Betätigungshebel
- 14: Ein-/Ausrückeinrichtung
- 15: Druckring
- 16: Andruckscheibe
- 17: Ein-/Ausrücklager
- 18: Ein-/Ausrückhebei
- 18.1: Ende
- 18.2: Ende
- 19: Federeinheit
- 20: Gegenlager
- 21: Führung
- 22: Lagerbock
- 23: Abstützung
- 24: Spindel
- 25: Rolle
- 26: Nachstellschieber
- 27: Kulisse
- 28.1 - 28.3: Führungsbahn der Kulisse
- 29: Gleitschieber, insbesondere Kulissenstein
- 30: Übertragungsglied
- 31: Antrieb
- 32: Stellmechanismus
- 33: Verriegelungseinheit
- 34: Mittel zur Übertragung
- 35: Erfassungseinrichtung
- 36: Kopplung
- 37: Federeinheit
- 38: Zahnrad
- 39: Hebel
- 40: Klinke
- 41: Federeinheit
- a, b: Hebellänge
- A: Außenlager
- B: Gegenlager
- C: Innenlager
- G: Drehpunkt
- R: Drehachse
- R1, R2: Rampe
- W: Wirkungsweg
- XE: Eingangsgröße
- xk: Stellweg Kupplungsbetätigung
- xv: Stellweg Nachstellvorrichtung
- Y1: Stellgröße Ansteuerung Verriegelungseinheit
- Y2: Stellgröße Nachstellbewegung
- YS1, YS2, YS3, YS4: Änderung Stellgröße Stelleinrichtung Wirkungsweg

## Patentansprüche

1. Betätigungsvorrichtung (3) für Kupplungen, insbesondere Kupplungen (2) im Antriebsstrang eines Kraftfahrzeuges zwischen einem Antriebsmotor und einem Schaltgetriebe, mit einer einen Antrieb (4) und Stelleinrichtungen (5) umfassenden, an der Kupplung (2) wirksamen Aktoreinheit (6), einer innerhalb des durch die Aktoreinheit (6) gebildeten Wirkungsweges (W) wirksamen Nachstellvorrichtung (1) zum Ausgleich zumindest von verschleißbedingten Kennlinienstreuungen der Kupplung (2),wobei die Nachstellvorrichtung (1) derart angeordnet und ausgeführt ist, geeignet zu sein, unabhängig vom tatsächlichen Auftreten verschleißbedingter Kennlinienstreuungen entsprechend einer Sollwertvorgabe über eine Steuer-/Regelvorrichtung (7) zum Ausüben von Nachstellbewegungen in unterschiedlichen Richtungen angesteuert zu werden, wobei eine Stelleinrichtung (5) der Aktoreinheit (6) der Betätigungsvorrichtung (3) ein Hebelsystem mit einem Aus- oder Einrückhebel (18), der sich mit einem Innenlager (C) an einem Ein/Ausrücklager (14) abstützt, einem sich an einer Federeinheit (19) abstützenden und in Wirkrichtung der Federeinheit (19) verschiebbaren Außenlager (A) und ein hinsichtlich seiner Position zwischen Innen- und Außenlager (C, A) verschiebbares Gegenlager (B) am Ein-/Ausrückhebel (18) zur Verstellung des Ein-/Ausrückhebels (18) umfasst, wobei ein Übertragungsglied der Nachstellvorrichtung (1) mit der Verschiebung des Gegenlagers (B) gekoppelt ist und mit einer ortsfesten, insbesondere gehäusefesten Kulisse (27) zusammenwirkt, und **dadurch gekennzeichnet, dass** Führungsbahnen (28.1, 28.2, 28.3) der Kulisse (27) zur Vorgabe unterschiedlicher Richtungen und/oder Größen einer Änderung zumindest einer Stellgröße innerhalb des Wirkungsweges (W) der Aktoreinheit (6) der Betätigungsvorrichtung (3) umfasst und Mittel (34) zur zumindest mittelbaren Übertragung der Änderungsvorgabe auf den Wirkungsweg (W) der Aktoreinheit (6), wobei die Kulisse (27) zumindest zwei Führungsbahnen (28.1, 28.2, 28.3) zur Charakterisierung von Änderungen der Stellgrößen im Wirkungsweg (W) der Betätigungsvorrichtung (3) in unterschiedlicher Richtung und Größe umfassen, wobei die einzelnen Führungsbahnen (28.1, 28.2, 28.3) unterschiedliche Führungsebenen (E1, E2) beschreiben, die über Rampen (R1, R2) miteinander verbunden sind und die Ausbildung und Dimensionierung der einzelnen Führungsbahnen (28.1, 28.2, 28.3) und der Rampen (R1, R2) als Funktion zumindest einer der nachfolgend genannten Größen festgelegt ist:
- der Richtung der Änderung der Stellgröße im Wirkungsweg (W) der Aktoreinheit (6) der Betätigungsvorrichtung (3),
- der erforderlichen Änderung der Stellgröße im Wirkungsweg (W) der Aktoreinheit (6) der Betätigungsvorrichtung (3),
- des Änderungsverhaltens der Stellgröße im Wirkungsweg (W) der Aktoreinheit (6);
- der Ausführung/Dimensionierung der mit der Verstellbewegung in der Kulisse (27) gekoppelten Mittel (34) zur Übertragung der Verstellbewegung, insbesondere der weiteren Übertragungsglieder (30).

2. Betätigungsvorrichtung (3) nach Anspruch 1, **dadurch gekennzeichnet, dass** die Nachstellvorrichtung (1) einen Antrieb (31) sowie zumindest einen mit dem Antrieb (31) gekoppelten Stellmechanismus (32) zur Einstellung zumindest einer, die Änderung einer Stellgröße innerhalb des Wirkungsweges (W) der Aktoreinheit (6) wenigstens mittelbar charakterisierenden Größe (YS1, YS2, YS3, YS4) umfasst, wobei der Antrieb (31) und der einzelne Stellmechanismus (32) der Nachstellvorrichtung (1) unabhängig von der Stelleinrichtung (5) der Betätigungsvorrichtung (3) betätigbar sind und die Nachstellvorrichtung (1) entkoppelt von der Betätigung der Betätigungsvorrichtung (3) über eine Steuer- und/oder Regelvorrichtung (7) in Abhängigkeit der Sollwertvorgabe aktivierbar oder deaktivierbar ist.

3. Betätigungsvorrichtung (3) nach Anspruch 2, **dadurch gekennzeichnet, dass** der Nachstellvorrichtung (1) eine mechanisch in den Wirkungsweg der Nachstellvorrichtung 81) blockierend eingreifbare Verriegelungs- beziehungsweise Sperreinheit (33) zugeordnet ist.

4. Betätigungsvorrichtung (3) nach einem der Ansprüche 1 bis 3, **dadurch gekennzeichnet, dass** der Antrieb (31) und ein Teil des Stellmechanismus (32) der Nachstellvorrichtung (1) vom Antrieb (4) und Bestandteilen der Stelleinrichtung (5) der Betätigungsvorrichtung (3) der Kupplung (2) unter Ausnutzung eines im Wirkungsweg (W) der Aktoreinheit (6) der Betätigungsvorrichtung (3) vorgesehenen zusätzlichen Stellweges (xv) oder Spiels, innerhalb dessen keine Kraftübertragung auf die Kupplung (2) erfolgt, gebildet werden.

5. Betätigungsvorrichtung (3) nach Anspruch1, **dadurch gekennzeichnet, dass** die Kulisse (27) drei Führungsbahnen (28.1, 28.2, 28.3) umfasst, eine erste Führungsbahn (28.1) als Zuführbahn für das Übertragungsglied zu den Führungsbahnen (28.2, 28.3), welche im Winkel zur Zuführbahn angeordnet sind und in entgegengesetzter Richtung zueinander ausgerichtet sind.

6. Betätigungsvorrichtung (3) nach Anspruch 1 und 5, **dadurch gekennzeichnet, dass** die Mittel (34) zur zumindest mittelbaren Übertragung der Vorgabe einer Änderung einer Stellgröße innerhalb des Wirkungsweges (W) der Aktoreinheit (6) durch die Nachstellvorrichtung (1) eine Einrichtung zur Umwandlung Bewegung innerhalb der Kulisse (27) in eine translatorische Bewegung, insbesondere Schubstange umfasst.

7. Betätigungsvorrichtung (3) nach Anspruch 1 und 5, **dadurch gekennzeichnet, dass** die Mittel (34) zur zumindest mittelbaren Übertragung der Vorgabe einer Änderung einer Stellgröße innerhalb des Wirkungsweges (W) der Aktoreinheit (6) durch die Nachstellvorrichtung (1) eine Einrichtung zur Umwandlung Bewegung innerhalb der Kulisse (27) in eine rotatorische Bewegung oder Schwenkbewegung, insbesondere Zahnrad (38) umfassen.

8. Betätigungsvorrichtung (3) nach einem der Ansprüche 1 bis 7, **dadurch gekennzeichnet, dass** die Mittel (34) zur Übertragung der durch die Verstellbewegung des Übertragungsgliedes an der Kulisse (27) an zumindest einem der nachfolgenden Bauteile zur Einstellung der erforderlichen Änderung wirksam wird:
- Außenlager (A)
- Federeinheit (19) zur Abstützung des Ein-/Ausrückhebels (18)
- Innenlager (C)
- Ein-/Ausrückhebel (18)
- dem Ein-/Ausrückhebei (18) zugeordnete Anschläge
- auf den Druckring (15) einer Druckplatte (9) wirkende Hebelfeder (13);
- an der Hebelfeder (13) wirksame Andrückscheibe (16)

## Claims

1. Actuation device (3) for clutches, in particular clutches (2) in the drive train of a motor vehicle between an engine and a shift transmission, with an actuator unit (6) comprising a drive (4) and manipulators (5) and active on the clutch (2), with an adjustment device (1), active within the action travel (W) formed by the actuator unit (6), for the compensation at least of wear-induced characteristic curve spreads of the clutch (2), the adjustment device (1) being arranged and designed in such a way as to be suitable to be activated independently of the actual occurrence of wear-induced characteristic curve spreads, according to a stipulation of a desired value via a control/regulating device (7), for the execution of adjustment movements in different directions, a manipulator (5) of the actuator unit (6) of the actuation device (3) comprising a lever system with a disengaging or engaging lever (18) which is supported by means of an inner bearing (C) on an engaging/disengaging bearing (14), with an outer bearing (A) supported on a spring unit (19) and displaceable in the direction of action of the spring unit (19), and a counterbearing (B), displaceable in terms of its position between the inner and the outer bearing (C, A), on the engaging/disengaging lever (18) for adjusting the engaging/disengaging lever (18), a transmission member of the adjustment device (1) being coupled with the displacement of the counterbearing (B) and operating with a fixed, in particular housingfixed, slotted link (27), and **characterized in that** the slotted link (27) comprises guide tracks (28.1, 28.2, 28.3) for stipulating different directions and/or sizes of a change of at least one manipulated variable within the action travel (W) of the actuator unit (6) of the actuation device (3) and means (34) for the at least indirect transmission of the stipulation of change to the action travel (W) of the actuator unit (6), the slotted link (27) comprising at least two guide tracks (28.1, 28.2, 28.3) for characterizing changes of the manipulated variables in the action travel (W) of the actuation device (3) in different directions and sizes, the individual guide tracks (28.1, 28.2, 28.3) describing different guide planes (E1, E2) which are connected to one another via ramps (R1, R2), and the form and dimension of the individual guide tracks (28.1, 28.2, 28.3) and of the ramps (R1, R2) being fixed as a function of at least one of the variables mentioned below:
- the direction of the change of the manipulated variable in the action travel (W) of the actuator unit (6) of the actuation device (3),
- the required change of the manipulated variable in the action travel (W) of the actuator unit (6) of the actuation device (3),
- the change behaviour of the manipulated variable in the action travel (W) of the actuator unit (6),
- the design/dimensioning of the means (34), coupled to the adjusting movement in the slotted link (27), for the transmission of the adjusting movement, in particular of the further transmission members (30).

2. Actuation device (3) according to Claim 1, **characterized in that** the adjustment device (1) comprises a drive (31) and at least one manipulating mechanism (32), coupled to the drive (31), for setting at least one variable (YS1, YS2, YS3, YS4) at least indirectly characterizing the change of a manipulated variable within the action travel (W) of the actuator unit (6), the drive (31) and the individual manipulating mechanism (32) of the adjustment device (1) being actuable independently of the manipulator (5) of the actuation device (3), and the adjustment device (1) being activatable or deactivatable, decoupled from the actuation of the actuation device (3), via a control and/or regulating device (7) as a function of the stipulation of the desired value.

3. Actuation device (3) according to Claim 2, **characterized in that** the adjustment device (1) is assigned a locking or blocking unit (33) mechanically engagable in a blocking manner into the action travel of the adjustment device (1).

4. Actuation device (3) according to one of Claims 1 to 3, **characterized in that** the drive (31) and part of the manipulating mechanism (32) of the adjustment device (1) are formed by the drive (4) and components of the manipulator (5) of the actuation device (3) of the clutch (2), utilizing an additional manipulating travel (xv) or play which is provided in the action travel (W) of the actuator unit (6) of the actuation device (3) and within which the transmission of force to the clutch (2) does not take place.

5. Actuation device (3) according to Claim 1, **characterized in that** the slotted link (27) comprises three guide tracks (28.1, 28.2, 28.3), a first guide track (28.1) as a feed track for the transmission member to the guide tracks (28.2, 28.3) which are arranged at an angle to the feed track and are oriented in opposite directions to one another.

6. Actuation device (3) according to Claims 1 and 5, **characterized in that** the means (34) for the at least indirect transmission of the stipulation of a change of a manipulated variable within the action travel (W) of the actuator unit (6) by the adjustment device (1) comprise an arrangement for converting movement within the slotted link (27) into a translational movement, in particular a push rod.

7. Actuation device (3) according to Claims 1 and 5, **characterized in that** the means (34) for the at least indirect transmission of the stipulation of a change of a manipulated variable within the action travel (W) of the actuator unit (6) by the adjustment device (1) comprise an arrangement for converting movement within the slotted link (27) into a rotational movement or pivoting movement, in particular a gearwheel (38).

8. Actuation device (3) according to one of Claims 1 to 7, **characterized in that** the means (34) for transmitting the adjusting movement of the transmission member to the slotted link (27) becomes effective at at least one of the following components for setting the required change:
- outer bearing (A)
- spring unit (19) for supporting the engaging/disengaging lever (18)
- inner bearing (C)
- engaging/disengaging lever (18)
- stops assigned to the engaging/disengaging lever (18)
- lever spring (13) acting upon the thrust ring (15) of a thrust plate (9)
- pressure disc (16) active on the lever spring (13)

## Revendications

1. Dispositif d'actionnement (3) pour embrayages, en particulier pour embrayages (2) dans la chaîne cinématique d'un véhicule automobile entre un moteur d'entraînement et une boîte de vitesses, comprenant une unité d'actionneur (6) présentant un entraînement (4) et des dispositifs de réglage (5), agissant sur l'embrayage (2), un dispositif de rattrapage (1) agissant à l'intérieur de la course d'action (W) formée par l'unité d'actionneur (6) pour compenser au moins des altérations de caractéristique de l'embrayage (2) dues à l'usure, le dispositif de rattrapage (1) étant disposé et réalisé de telle sorte qu'il soit adapté pour être commandé indépendamment de la présence effective d'altérations de caractéristique dues à l'usure en fonction d'une valeur de consigne prédéfinie par le biais d'un dispositif de commande/régulation (7) pour exercer des mouvements de rattrapage dans des directions différentes, un dispositif de réglage (5) de l'unité d'actionneur (6) du dispositif d'actionnement (3) comprenant un système de levier muni d'un levier de débrayage ou d'embrayage (18) qui s'appuie avec un palier intérieur (C) sur un palier d'embrayage/débrayage (14), d'un palier extérieur (A) s'appuyant sur une unité de ressort (19) et pouvant être déplacé dans la direction d'action de l'unité de ressort (19), et un palier conjugué (B) pouvant être déplacé dans sa position entre le palier intérieur et le palier extérieur (C, A) sur le levier d'embrayage/débrayage (18) pour déplacer le levier d'embrayage/débrayage (18), un organe de transfert du dispositif de rattrapage (1) étant accouplé au déplacement du palier conjugué (B) et coopérant avec une coulisse fixe (27), en particulier fixée au boîtier, et **caractérisé en ce que** la coulisse (27) présente des pistes de guidage (28.1, 28.2, 28.3) pour prédéfinir des directions différentes et/ou des ampleurs d'une variation d'au moins une grandeur de réglage à l'intérieur de la course d'action (W) de l'unité d'actionneur (6) du dispositif d'actionnement (3) et des moyens (34) pour le transfert au moins indirect de la valeur prédéfinie de variation à la course d'action (W) de l'unité d'actionneur (6), la coulisse (27) comprenant au moins deux pistes de guidage (28.1, 28.2, 28.3) pour caractériser des variations des grandeurs de réglage dans la course d'action (W) du dispositif d'actionnement (3) dans une direction et une ampleur différentes, les pistes de guidage individuelles (28.1, 28.2, 28.3) décrivant des plans de guidage différents (E1, E2) qui sont connectés les uns aux autres par le biais de rampes (R1, R2) et la réalisation et le dimensionnement des pistes de guidage individuelles (28.1, 28.2, 28.3) et des rampes (R1, R2) étant définis en fonction d'au moins l'une des grandeurs citées ci-dessous :
- la direction de la variation de la grandeur de réglage dans la course d'action (W) de l'unité d'actionneur (6) du dispositif d'actionnement (3),
- la variation requise de la grandeur de réglage dans la course d'action (W) de l'unité d'actionneur (6) du dispositif d'actionnement (3),
- le comportement de variation de la grandeur de réglage dans la course d'action (W) de l'unité d'actionneur (6) ;
- la réalisation/le dimensionnement des moyens (34) accouplés au mouvement de réglage dans la coulisse (27) pour transmettre le mouvement de réglage, en particulier des autres organes de transfert (30) .

2. Dispositif d'actionnement (3) selon la revendication 1, **caractérisé en ce que** le dispositif de rattrapage (1) comprend un entraînement (31) ainsi qu'au moins un mécanisme de réglage (32) accouplé à l'entraînement (31) pour ajuster au moins une grandeur (YS1, YS2, YS3, YS4) caractérisant au moins de manière indirecte la variation d'une grandeur de réglage à l'intérieur de la course d'action (W) de l'unité d'actionneur (6), l'entraînement (31) et le mécanisme de réglage individuel (32) du dispositif de rattrapage (1) pouvant être actionnés indépendamment du dispositif de réglage (5) du dispositif d'actionnement (3) et le dispositif de rattrapage (1) pouvant être activé ou désactivé de manière désaccouplée de l'actionnement du dispositif d'actionnement (3) par le biais d'un dispositif de commande et/ou de régulation (7) en fonction de la valeur de consigne prédéfinie.

3. Dispositif d'actionnement (3) selon la revendication 2, **caractérisé en ce que** le dispositif de rattrapage (1) est associé à une unité de verrouillage ou de blocage (33) pouvant s'engager par blocage de manière mécanique dans la course d'action du dispositif de rattrapage (1).

4. Dispositif d'actionnement (3) selon l'une quelconque des revendications 1 à 3, **caractérisé en ce que** l'entraînement (31) et une partie du mécanisme de réglage (32) du dispositif de rattrapage (1) sont formés par l'entraînement (4) et des constituants du dispositif de réglage (5) du dispositif d'actionnement (3) de l'embrayage (2) en utilisant une course de réglage supplémentaire (xv) ou un jeu supplémentaire prévu(e) dans la course d'action (W) de l'unité d'actionneur (6) du dispositif d'actionnement (3), à l'intérieur de laquelle course ou duquel jeu n'a lieu aucun transfert de force à l'embrayage (2).

5. Dispositif d'actionnement (3) selon la revendication 1, **caractérisé en ce que** la coulisse (27) comprend trois pistes de guidage (28.1, 28.2, 28.3), une première piste de guidage (28.1) en tant que piste d'amenée pour l'organe de transfert aux pistes de guidage (28.2, 28.3), lesquelles sont disposées suivant un angle par rapport à la piste d'amenée et sont orientées l'une par rapport à l'autre dans une direction opposée.

6. Dispositif d'actionnement (3) selon les revendications 1 et 5, **caractérisé en ce que** les moyens (34) pour le transfert au moins indirect de la valeur prédéfinie d'une variation d'une grandeur de réglage à l'intérieur de la course d'action (W) de l'unité d'actionneur (6) par le dispositif de rattrapage (1) comprennent un dispositif pour convertir le mouvement à l'intérieur de la coulisse (27) en un mouvement de translation, en particulier une tige poussoir.

7. Dispositif d'actionnement (3) selon les revendications 1 et 5, **caractérisé en ce que** les moyens (34) pour le transfert au moins indirect de la valeur prédéfinie d'une variation d'une grandeur de réglage à l'intérieur de la course d'action (W) de l'unité d'actionneur (6) par le dispositif de rattrapage (1) comprend un dispositif pour convertir le mouvement à l'intérieur de la coulisse (27) en un mouvement de rotation ou un mouvement de pivotement, en particulier une roue dentée (38).

8. Dispositif d'actionnement (3) selon l'une quelconque des revendications 1 à 7, **caractérisé en ce que** les moyens (34) pour le transfert du mouvement de réglage de l'organe de transfert au niveau la coulisse (27) agissent sur au moins l'un des composants suivants pour l'ajustement de la variation requise :
- palier extérieur (A)
- unité de ressort (19) pour supporter le levier d'embrayage/débrayage (18)
- palier intérieur (C)
- levier d'embrayage/débrayage (18)
- butées associées au levier d'embrayage/débrayage (18)
- ressort de levier (13) agissant sur la bague de pression (15) d'une plaque de pression (9) ;
- disque de pression (16) agissant sur le ressort de levier (13).
